# EUROPÄISCHE PATENTSCHRIFT

(11) **EP 2 180 967 B1**
(45) Veröffentlichungstag und Bekanntmachung des Hinweises auf die Patenterteilung: **11.09.2013**
(21) Anmeldenummer: 08758865.3
(22) Anmeldetag: 29.05.2008
(51) Int. Cl.: B23H 7/00, B23H 9/00, F04C 2/08

(54) **VERFAHREN ZUR HERSTELLUNG EINES MASCHINENGEHÄUSES MIT OBERFLÄCHENGEHÄRTETER FLUIDKAMMER**
METHOD FOR PRODUCING A MACHINE HOUSING WITH A SURFACE-HARDENED FLUID CHAMBER
PROCÉDÉ POUR FABRIQUER UN CORPS DE MACHINE COMPORTANT UNE CHAMBRE DE FLUIDE À SURFACE DURCIE

(30) Priorität: 24.07.2007 DE 102007034489; 06.02.2008 DE 102008007769
(43) Veröffentlichungstag der Anmeldung: 05.05.2010
(73) Patentinhaber: Brinkmann Pumpen K.H. Brinkmann GmbH & Co. KG, 58791 Werdohl (DE)
(72) Erfinder: WAGNER, Peter, 58791 Werdohl (DE)
(74) Vertreter: Wiebusch, Manfred
(86) Internationale Anmeldenummer: PCT/EP2008/004285
(87) Internationale Veröffentlichungsnummer: WO 2009/012837

(56) Entgegenhaltungen:
- WO-A-02/096587
- US-A- 3 878 880
- US-A- 6 005 214

## Beschreibung

Die Erfindung betrifft ein Verfahren zur Herstellung eines Maschinengehäuses mit einer Fluidkammer, die auf der Innenfläche ihrer Wand eine Härtungsschicht aufweist, die aus einem Material hergestellt wird, das an sich nicht elektrisch leitfähig ist, jedoch durch Zusätze leitfähig gemacht wird, und deren Oberfläche durch Elektroerosion bearbeitet wird, mit den Merkmale des Oberbegriffs des Ansprüchs 1. Ein derartiges Verfahren ist aus EP 1 748 192 A2 bekannt.

Bei Maschinen wie beispielsweise Pumpen, Verbrennungsmotoren und dergleichen, die eine Fluidkammer aufweisen, in der sich ein Kolben, ein Läufer, eine Schraubenspindel oder ein sonstiges Innenteil bewegt, ist die Innenwand der Fluidkammer, dort wo sie mit dem Innenteil in Reibberührung steht, einem erheblichen Verschleiß ausgesetzt. Es ist deshalb bekannt, auf der Innenfläche der Wand der Fluidkammer eine Härtungsschicht anzubringen, beispielsweise durch Einkleben einer Schale aus abriebfester Keramik, typischerweise aus Siliciumcarbid.

Aus EP 1 748192 A2 ist ein Verfahren der eingangs genannten Art bekannt. Dabei wird das Siliciumcarbid durch Zusätze (z. B. US 5 177 037 A1) elektrisch leitfähig gemacht, so daß sich die Schicht durch Elektroerosion bearbeiten läßt.

Damit die Kontur der Fluidkammer präzise an die Geometrie des Innenteils angepaßt wird, ist eine Nachbearbeitung durch Schleifen erforderlich. Aufgrund der Härte der Schicht aus Siliciumcarbid ist diese Nachbearbeitung jedoch sehr arbeitsaufwendig und damit sehr kostspielig.

Aufgabe der Erfindung ist es deshalb, ein verbessertes Verfahren zur Herstellung des Gehäuses eines solchen Maschinenghäuses anzugeben.

Gelöst wird diese Aufgabe durch ein Verfahren mit den Merkmalen des Patentanspruchs 1.

Zum Erodieren können alle bekannten Erosionsverfahren wie beispielsweise Drahterosion, Senkerosion und dergleichen eingesetzt werden, so daß die bekannten Vorteile dieser Verfahren sich auch im Rahmen der Erfindung nutzen lassen. Insbesondere sind Verfahren und Vorrichtungen zum automatischen Wechsel des Erosionsdrahtes oder der Erosionselektrode bekannt, so daß sich das Verfahren für hohe Stückzahlen weitgehend automatisieren läßt. Aufgrund der Flexibilität der Erosionsverfahren bestehen außerdem kaum Beschränkungen hinsichtlich der Geometrie der Fluidkammern.

Ein geeignetes Material für die elektrisch leitfähige Härtungsschicht ist leitfähiges Siliciumcarbid, das beispielsweise von der Firma Schunk Ingenieurtechnik in Willich, Deutschland, angeboten wird.

Im folgenden wird ein Ausführungsbeispiel der Erfindung anhand der Zeichnung näher erläutert.

Es zeigen:
- Fig. 1: eine zur Hälfte aufgebrochene perspektivische Ansicht eines Maschinengehäuses, auf das die Erfindung anwendbar ist;
- Fig. 2: eine Stirnansicht einer Halbschale des Gehäuses nach Fig. 1;
- Fig. 3: einen schematischen Schnitt zur Illustration eines Elektroerosionsverfahrens; und
- Fig. 4 - 6: verschiedene Stadien bei der Bearbeitung einer SiC-Schale nach einem Verfahren gemäß der Erfindung.

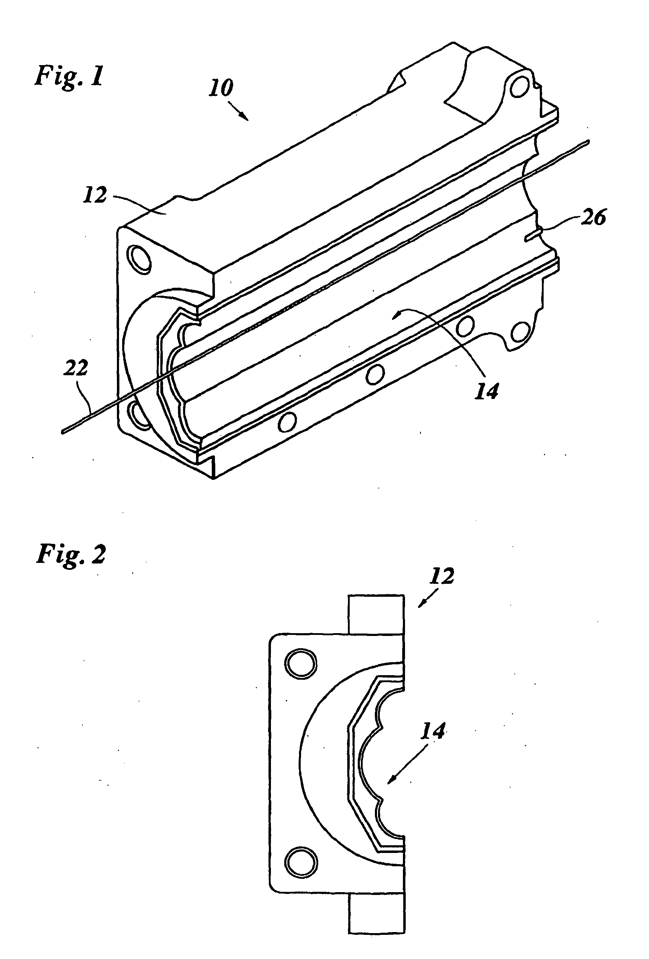

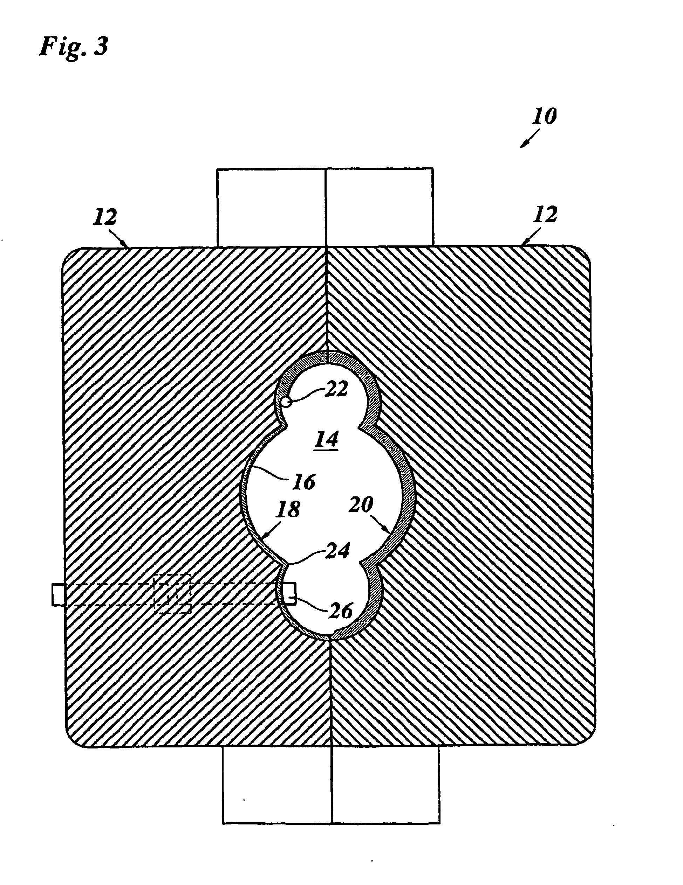

In Fig. 1 ist eine Hälfte eines Gehäuses 10 einer Maschine dargestellt, beispielsweise einer Schraubenspindelpumpe oder eines Schraubenspindelkompressors. Zwei zueinander komplementäre Halbschalen 12 des Gehäuses 10 sind aus Metallguß hergestellt und werden anschließend zu dem kompletten Gehäuse zusammengefügt und beispielsweise durch Bolzen miteinander verbunden. Fig. 1 und 2 zeigen nur eine der beiden Halbschalen. Im Inneren des Gehäuses 10 ist eine auf ganzer Länge des Gehäuses durchgehende Fluidkammer 14 gebildet, die auf ganzer Länge einen einheitlichen Querschnitt aufweist. Wie deutlicher in Fig. 2 und 3 zu erkennen ist, wird der Querschnitt der Fluidkammer 14 durch drei einander überlappende Kreise gebildet, von denen der mittlere einen größeren Durchmesser hat als die beiden übrigen Kreise. Diese Fluidkammer nimmt bei der fertigen Schraubenspindelpumpe drei parallele, miteinander kämmende Schraubenspindeln auf, deren Umkreis jeweils einem der drei Kreise des Querschnitts entspricht.

In der Schnittdarstellung in Fig. 3 ist zu erkennen, daß die Innenwand der Fluidkammer 14 eine Härtungsschicht 16 aufweist. Diese Härtungsschicht wird beispielsweise durch zwei zueinander komplementäre Schalen 18, 20 aus elektrisch leitfähigem Siliciumcarbid (z.B.: CarSIK-NT der Firma Schunk, Willich, Deutschland, spezifischer Widerstand ca. 0,001 Ω.m) gebildet, die beispielsweise mit Hilfe eines elektrisch leitenden Klebers in ausgefräste Höhlungen der Halbschalen 12 eingeklebt werden.

Im oberen Bereich der Schale 18 und bei der Schale 20 hat die Härtungsschicht 16 noch eine größere Dicke. Diese Dicke entspricht der Wanddicke der ursprünglich eingeklebten Schale. Im gezeigten Beispiel wird durch Drahterosion mittels eines Drahtes 22 die Dicke der Härtungsschicht 16 auf das letztlich gewünschte Maß reduziert, wobei zugleich die Innenfläche der Härtungsschicht präzise die gewünschte Kontur erhält. Bei dem hier gezeigten Beispiel, bei dem die Fluidkammer 12 auf ganzer Länge einen einheitlichen Querschnitt hat, bietet sich das Drahterosionsverfahren mit Hilfe des Drahtes 22 an, der, wie Fig. 1 zeigt, so gespannt ist, daß er sich durch das gesamte Gehäuse erstreckt. Die Enden des Drahtes 22 können dabei in einer bekannten, nicht gezeigten Erosionsvorrichtung so gehalten und geführt sein, daß sie sich auf exakten Kreisbögen bewegen, um die gewünschte Querschnittsform der Fluidkammer 12 aus drei einander überlappenden Kreisen darzustellen. Wahlweise kann jedoch, etwa mit Hilfe einer bekannten CNC-Steuerung, auch eine andere Kontur mit im Prinzip beliebiger Querschnittsform hergestellt werden.

Bevorzugt werden beim Erodieren die Kanten 24 an den Übergängen zwischen den verschiedenen Querschnittskreisbögen so verrundet, daß man einerseits eine hohe Bruchsicherheit und andererseits minimale Leckverluste während des Betriebs der Maschine erreicht.

Im hier beschriebenen Beispiel besteht die Härtungsschicht 16 (die beiden Schalen 18, 20) zu 92 % aus Siliciumcarbid und zu 8 % aus leitfähigem Silicium, das der Schicht insgesamt eine für das Erodieren ausreichende Leitfähigkeit verleiht. Zugleich hat dieses Material den Vorteil, daß es beim Brennen der Schalen 18, 20 praktisch keinen Schwund aufweist, wodurch sich die Schalen maßhaltiger herstellen lassen.

Wenn die Härtungsschicht erst nach dem Zusammenfügen der beiden Halbschalen 12 erodiert wird, ergibt sich der Vorteil, daß man auch an der Fuge zwischen den Schalen 18, 20 sehr saubere Übergänge erhält.

In einer anderen Ausführungsform ist es auch möglich, die gesamte Härtungsschicht in einem Stück als eine rohrförmige Schale herzustellen, die dann beim Zusammenfügen der Gehäusehalbschalen zwischen diesen eingefügt und anschließend erodiert wird.

Zum Drahterodieren werden vorzugsweise mehrere Gehäuse 10 mit vertikaler Achse in einem zweidimensionalen Raster auf eine Bank einer Erosionsmaschine aufgespannt und dann nacheinander erodiert. Wenn der Erosionsprozeß für ein Gehäuse abgeschlossen ist, wird der Draht 22 automatisch abgeschnitten, und die Erosionsvorrichtung fährt zum nächsten Gehäuse und schießt einen neuen Draht ein, so daß automatisch der Erosionsprozeß an dem neuen Gehäuse fortgeführt werden kann. Auf diese Weise wird eine rationelle Massenfertigung ermöglicht.

Alternativ lassen sich mit Hilfe anderer Erosionsverfahren, beispielsweise mit Hilfe der Senkerosion, auch die Härtungsschichten von Fluidkammern bearbeiten, deren Querschnitt auf der Länge variiert und/oder die sphärisch gekrümmte Oberflächenabschnitte aufweisen.

Wenn zum Einkleben der Härtungsschicht 16 kein elektrisch leitfähiger Kleber verwendet wird, kann die zum Erodieren notwendige elektrische Kontaktierung der Härtungsschicht 16 auch mit Hilfe eines Klemmbügels 26 erfolgen, der in Fig. 1 und 3 dargestellt ist. Gegebenenfalls muß dann im Verlauf des Erosionsprozesses der Klemmbügel einmal umgesetzt werden, damit auch die Oberflächenbereiche der Härtungsschicht 16 bearbeitet werden können, in denen zuvor der Klemmbügel gesessen hat. Alternativ wird der Klemmbügel 26 so angebracht, daß er nur Stirnflächen der Härtungsschicht 16 an den Enden des Gehäuses berührt.

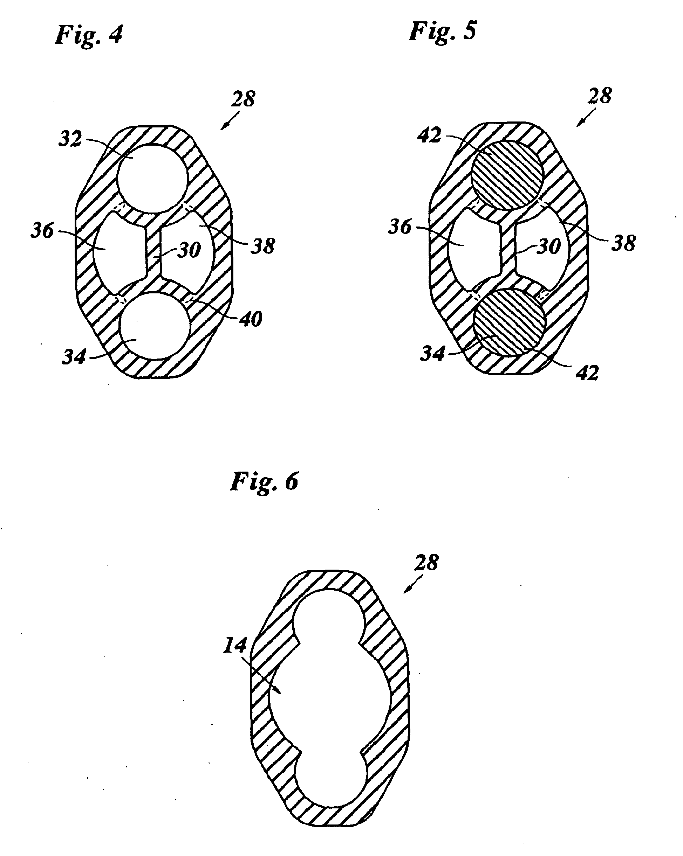

Anhand der Figuren 4 bis 6 wird nun das erfindungsgemäße Verfahren im Detail erläutert.

In Figur 4 ist nur eine Schale 28 aus leitfähigem Siliziumkarbid dargestellt, die in ein nicht gezeigtes Gehäuse eingesetzt ist oder wird. Die Grundform der Schale 28 entspricht der Form der beiden zusammengesetzten Schalen 18, 20 nach Figur 3, jedoch mit dem Unterschied, daß das im Inneren der späteren Fluidkammer ein Kreuz 30 stehen gelassen wurde, das die spätere Fluidkammer in vier separate Kammern 32, 34, 36 und 38 unterteilt. Die Kammern 32 und 34 haben einen kreisförmigen Querschnitt, während die Querschnitte der Kammern 36 und 38 zusammen den zentralen Bereich der Fluidkammer mit dem größeren kreisförmigen Querschnitt bilden.

In dem in Figur 4 gezeigten Zustand sind die Oberflächen der Kammern 32 - 38 bereits durch Erosion bearbeitet worden. Wahlweise können die Stege des Kreuzes 30, dort wo sie an die Außenwand der Schale anschließen, durch Ausnehmungen geschwächt sein, die in demselben Erosionsschritt oder in einem gesonderten Erosionsschritt hergestellt werden können. Das Kreuz 30 ist dann mit der Außenwand der Schale 28 nur noch über Sollbruchstellen 40 verbunden, die später das Entfernen des Kreuzes 30 erleichtern.

Nach dem Erodieren werden in die kreisförmigen Kammern 32 und 34, vorzugsweise gleichzeitig, mechanische Bearbeitungswerkzeuge 42 eingesetzt (Fig. 5), mit denen die Innenflächen dieser Kammern durch Honen, Läppen oder dergleichen mechanisch nachbearbeitet werden. Das hat den Vorteil, daß in diesen Kammern die Rauhtiefe der Oberfläche weiter verringert werden kann. Bei einer Schraubenspindelpumpe oder einem Schraubenspindelkompressor bilden diese Kammern 32, 34 die Lager für die beiden äußeren Spindeln, die durch den Druck des geförderten Fluids in entgegengesetzte Richtungen auseinandergedrückt werden, so daß hier in den Lagern besonders hohe Reibungskräfte auftreten. Durch die mechanische Nachbearbeitung gerade dieser Kammern kann deshalb eine weitere Verschleißminderung erreicht werden.

Wenn die beiden Kammern 32, 34 gleichzeitig mit den Werkzeugen 42 nachbearbeitet werden, so heben sich die von den Werkzeugen 42 auf das Kreuz 30 ausgeübten Kräfte gegenseitig auf und führen lediglich zu einer Druckbelastung des vertikalen Steges dieses Kreuzes, aber nicht zu einer Biegebelastung derjenigen Teile, die die Wände der Kammern 32, 34 bilden. Das Kreuz 30 kann deshalb verhältnismäßig dünnwandig ausgelegt oder eben durch die gestrichelt angedeuteten Sollbruchstellen 40 geschwächt sein. Wahlweise können die Sollbruchstellen jedoch auch erst nach der mechanischen Bearbeitung gebildet werden.

Nachdem die mechanische Nachbearbeitung abgeschlossen ist, kann das Kreuz 30 herausgeschlagen oder durch Erosion herausgetrennt werden, so daß man schließlich die in Figur 6 gezeigte fertige Schale mit der nun einteiligen Fluidkammer 14 erhält. Etwaig Grate an den Stellen, an denen sich zuvor die Sollbruchstellen befunden haben, können erforderlichenfalls durch Nachbearbeitung entfernt werden.

Zum Herstellen der Schale 28 gemäß Figur 4 wird vorzugsweise eine Erodiervorrichtung eingesetzt, mit der der Erosionsdraht automatisch nacheinander in die Kammern 32 - 38 eingeschossen werden kann, ohne daß zwischendurch die Aufspannung des Werkstücks geändert werden muß. Dadurch läßt sich bei der Erosionsbearbeitung eine hohe Maßhaltigkeit sicherstellen.

## Patentansprüche

1. Verfahren zur Herstellung eines Maschinengehäuses mit einer Fluidkammer (14), die auf der Innenfläche ihrer Wand eine Härtungsschicht (16) aufweist, die aus einem Material hergestellt wird, das an sich nicht elektrisch leitfähig ist, jedoch durch Zusätze leitfähig gemacht wird, und deren Oberfläche durch Elektroerosion bearbeitet wird, **dadurch gekennzeichnet, daß** die Härtungsschicht durch eine Schale (28) gebildet wird, die in dem Gehäuse eingesetzt wird, wobei im Inneren der späteren Fluidkammer zuerst ein aus dem Material der Schale gebildetes Kreuz (30), das die spätere Fluidkammer in vier separate Kammern unterteilt, stehengelassen wird, wobei mindestens zwei Kammern (32, 34) einen kreisförmigen Querschnitt haben, wobei die Oberflächen der mindestes zwei Kammern durch Elektroerosion bearbeitet werden und ihre Innenflächen nach dem Erodieren mechanisch nachbearbeitet werden, und daß das Kreuz (30) nach dieser mechanischen Nachbearbeitung zur Bildung der Fluidkammer entfernt wird.

2. Verfahren nach Anspruch 1, **dadurch gekennzeichnet, daß** für die Härtungsschicht (16) elektrisch leitfähiges Siliciumcarbid verwendet wird.

3. Verfahren nach einem der vorstehenden Ansprüche, **dadurch gekennzeichnet, daß** die Härtungsschicht (16) als vorgefertigte Schale (18, 20; 28) in eine entsprechende Höhlung des Gehäuses (10) eingeklebt und anschließend durch Erosion bearbeitet wird.

4. Verfahren nach Anspruch 3, **dadurch gekennzeichnet, daß** die Härtungsschicht (16) mit Hilfe eines elektrisch leitfähigen Klebers eingeklebt wird.

5. Verfahren nach einem der vorstehenden Ansprüche, **dadurch gekennzeichnet, daß** die Härtungsschicht (16) während der Erosion mit Hilfe eines Klemmbügels (26) elektrisch kontaktiert wird.

6. Verfahren nach einem der vorstehenden Ansprüche, **dadurch gekennzeichnet, daß** die Bearbeitung der Härtungsschicht (16) durch Drahterosion erfolgt.

7. Verfahren nach einem der Ansprüche 1 bis 5, **dadurch gekennzeichnet, daß** die Bearbeitung der Härtungsschicht (16) durch Senkerosion erfolgt.

8. Verfahren nach einem der vorstehenden Ansprüche, **dadurch gekennzeichnet, daß** das Maschinengehäuse aus zwei Halbschalen (12) zusammengesetzt wird, die jeweils einen Teil der Fluidkammer (14) bilden, und daß das Erodieren erst nach dem Zusammenfügen der Halbschalen erfolgt.

9. Verfahren nach einem der vorstehenden Ansprüche, **dadurch gekennzeichnet, daß** die beiden Kammern (32, 34) gleichzeitig mechanisch nachbearbeitet werden.

10. Verfahren nach einem der vorstehenden Ansprüche, **dadurch gekennzeichnet, daß** das Kreuz (30) an Sollbruchstellen (40) aus der Schale herausgebrochen wird.

11. Verfahren nach einem der Ansprüche 1 bis 9, **dadurch gekennzeichnet, daß** das Kreuz (30) durch Erosion aus der Schale herausgetrennt wird.

## Claims

1. Method for manufacturing a machine housing having a fluid chamber (14) with a hardening layer (16) on an internal wall surface, the hardening layer being made of a material, that, per-se, is not electrically conductive but has been made conductive by additives, wherein the surface of the hardening layer (16) is machined by electro-discharge machining, **characterized in that** the hardening layer is formed by a shell (28) that is inserted in the housing, wherein, in the interior of the fluid chamber to be formed, there is at first left a cross (30) that is formed of the material of the shell and divides the fluid chamber to be formed into four separate chambers, at least two chambers (32, 34) having a circular cross-section, the internal surfaces of these at least two chambers are mechanically finished subsequent to the electro-discharge machining, and, subsequent to the mechanical finish, the cross (30) is removed in order to form the fluid chamber.

2. Method according to claim 1, **characterized in that** electrically conductive silicon carbide is used for the hardening layer (16).

3. Method according to any of the preceding claims, **characterized in that** the hardening layer (16) is formed as a pre-prepared shell (18, 20; 28) and is adhesively fixed in a corresponding cavity of the housing (10) and then machined by electro-discharge machining.

4. Method according to claim 3, **characterized in that** the hardening layer (16) is fixed by means of an electrically conductive glue.

5. Method according to any of the preceding claims, **characterized in that** the hardening layer (16) is contacted during electro-discharge machining by means of a clamping bow (26).

6. Method according to any of the preceding claims, **characterized in that** the machining of the hardening layer (16) is achieved by wire electro-discharge machining.

7. Method according to any of the claims 1 to 5, **characterized in that** the hardening layer (16) is machined by die sinking electro-discharge machining.

8. Method according to any of the preceding claims, **characterized in that** the machine housing is composed of two half shells (12) each of which forms a part of the fluid chamber (14), and **in that** electro-discharge machining is performed only after the half shells have been joined.

9. Method according to any of the preceding claims, **characterized in that** the two chambers (32, 34) are mechanically finished simultaneously.

10. Method according to any of the preceding claims, **characterized in that** the cross (30) is separated from the shell by breaking at rated break points (40).

11. Method according to any of the claims 1 to 9, **characterized in that** the cross (30) is separated from the shell by electro-discharge machining.

## Revendications

1. Procédé pour fabriquer un carter de machine ayant une chambre de fluide (14) comportant une couche de durcissement (16) sur la surface intérieure de sa paroi, laquelle couche de durcissement est fabriquée à partir d'un matériau qui n'est pas électriquement conducteur en soi mais qui peut être rendu conducteur par des additifs et dont la surface est usinée par électroérosion, **caractérisé en ce que** la couche de durcissement est formée par une coquille (28) qui est insérée dans le carter dans lequel une croix (30) formée à partir du matériau de la coquille est d'abord laissée à l'intérieur de la chambre de fluide ultérieure, laquelle croix divise la chambre de fluide ultérieure en quatre chambres séparées, dans lequel au moins deux chambres (32, 34) ont une section transversale de forme circulaire, dans lequel les surfaces des au moins deux chambres sont usinées par électroérosion et leurs surfaces intérieures sont soumises à une finition mécanique après l'érosion, et **en ce que** la croix (30) est retirée de la chambre de fluide après cette finition mécanique afin de former la chambre de fluide.

2. Procédé selon la revendication 1, **caractérisé en ce que** du carbure de silicium électriquement conducteur est utilisé pour la couche de durcissement (16).

3. Procédé selon l'une des revendications précédentes, **caractérisé en ce que** la couche de durcissement (16) sous forme de coquille préfabriquée (18, 20 ; 28) est collée dans une cavité correspondante du carter (10), puis est usinée par érosion.

4. Procédé selon la revendication 3, **caractérisé en ce que** la couche de durcissement (16) est collée au moyen d'une colle électriquement conductrice.

5. Procédé selon l'une des revendications précédentes, **caractérisé en ce que** la couche de durcissement (16) est électriquement mise en contact pendant l'érosion à l'aide d'un étrier de serrage (26).

6. Procédé selon l'une des revendications précédentes, **caractérisé en ce que** l'usinage de la couche de durcissement (16) s'effectue par érosion à fil.

7. Procédé selon l'une des revendications 1 à 5, **caractérisé en ce que** l'usinage de la couche de durcissement (16) s'effectue par érosion par enfonçage.

8. Procédé selon l'une des revendications précédentes, **caractérisé en ce que** le carter de machine est assemblé à partir de deux demies coquilles (12) qui forment respectivement une partie de la chambre de fluide (14), et **en ce que** l'érosion s'effectue d'abord après l'assemblage des demies coquilles.

9. Procédé selon l'une des revendications précédentes, **caractérisé en ce que** les deux chambres (32, 34) sont en même temps soumises à une finition mécanique.

10. Procédé selon l'une des revendications précédentes, **caractérisé en ce que** la croix (30) est cassée dans la coquille à des emplacements de cassure prévus (40).

11. Procédé selon l'une des revendications 1 à 9, **caractérisé en ce que** la croix (30) est séparée de la coquille par érosion.
